# FASCICULE DE BREVET EUROPEEN

(11) **EP 3 772 164 B1**
(45) Date de publication et mention de la délivrance du brevet: **07.06.2023**
(21) Numéro de dépôt: 20188378.2
(22) Date de dépôt: 29.07.2020
(51) Int. Cl.: H02M 1/08, H02M 1/42, H02M 3/337, H02J 50/10, H02M 1/36, H02M 5/257, H02M 1/00

(54) **CONVERTISSEUR DE PUISSANCE**
LEISTUNGSWANDLER
POWER CONVERTER

(30) Priorité: 30.07.2019 FR 1908701
(43) Date de publication de la demande: 03.02.2021
(73) Titulaire: Commissariat à l'Energie Atomique et aux Energies Alternatives, 75015 Paris (FR)
(72) Inventeur: BERGOGNE, Dominique, 38054 GRENOBLE CEDEX 9 (FR); PERICHON, Pierre, 38054 GRENOBLE CEDEX 9 (FR); STERNA, Léo, 38054 GRENOBLE CEDEX 9 (FR)
(74) Mandataire: Cabinet Beaumont

(56) Documents cités:
- WO-A1-2019/064259
- US-B1- 10 050 534
- US-B1- 10 122 367
- EVZELMAN M ET AL: "A Generic Model of a Gyrator Based APFC", APPLIED POWER ELECTRONICS CONFERENCE AND EXPOSITION, 2009. APEC 2009. TWENTY-FOURTH ANNUAL IEEE, IEEE, PISCATAWAY, NJ, USA, 15 février 2009 (2009-02-15), pages 755-759, XP031442767, ISBN: 978-1-4244-2811-3

## Description

### Domaine technique

La présente description concerne le domaine des convertisseurs de puissance, et vise plus particulièrement le domaine des convertisseurs dits à commande de phase.

### Technique antérieure

Un convertisseur de puissance à commande de phase comprend typiquement un étage primaire modulant la puissance d'entrée à une fréquence relativement élevée appelée fréquence de découpage, suivi d'un étage d'isolation adapté à transmettre la puissance modulée par l'étage primaire, suivi d'un étage secondaire démodulant la puissance transmise par l'étage d'isolation et fournissant la puissance de sortie du convertisseur. Chacun des étages primaire et secondaire comprend un ou plusieurs interrupteurs commandés en commutation, aussi appelés interrupteurs de découpage. Le contrôle du transfert de puissance entre l'entrée et la sortie du convertisseur est réalisé en jouant sur le déphasage entre la commande du ou des interrupteurs de l'étage primaire et la commande du ou des interrupteurs de l'étage secondaire, les deux étages étant commandés à la même fréquence. Des exemples de convertisseurs de puissance à commande de phase sont notamment décrits dans les demandes de brevet FR3061817 et FR3061818 précédemment déposées par le demandeur.

De façon classique, un convertisseur à commande de phase comprend un circuit de contrôle commun aux étages primaire et secondaire, adapté à mettre en oeuvre des mesure de tension et/ou de courant dans chacun des étages primaire et secondaire, à générer les lois de commande des interrupteurs des étages primaire et secondaire, et à assurer la distribution des signaux de commande vers les étages primaire et secondaire. Du fait de l'isolation entre les étages primaire et secondaire, le circuit de contrôle commun est relativement complexe et coûteux. En particulier, il faut généralement prévoir des mesures de tension et/ou courant isolées, et des composants de communication isolés entre l'étage primaire et l'étage secondaire, par exemple des opto-coupleurs ou des isolateurs RF. Ces liaisons de l'étage primaire et de l'étage secondaire vers un même circuit de contrôle commun sont particulièrement problématiques lorsque les étages primaire et secondaire sont physiquement séparés l'un de l'autre, par exemple dans le cas d'un système de transmission d'énergie sans fil.

Il serait souhaitable de pallier tout ou partie des inconvénients des convertisseurs à commande de phase connus. Les documents US10122367B1, WO2019/064259 et US10050534B1, ainsi que l'article intitulé "A Generic Model of a Gyrator Based APFC", de Evzelman M et Al. (XP031442767), décrivent des exemples de convertisseurs de puissance.

### Résumé de l'invention

Pour cela un mode de réalisation prévoit un convertisseur de puissance comportant les caractéristiques de la revendication indépendante 1. Les revendications dépendantes divulguent des modes de réalisation préférés.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma électrique d'un exemple d'un convertisseur de puissance à commande de phase selon un mode de réalisation ;
la figure 2 est un schéma électrique d'une variante de réalisation du convertisseur de la figure 1 ;
la figure 3 est un diagramme illustrant le fonctionnement du convertisseur de la figure 1 ou 2 ;
la figure 4 est un autre diagramme illustrant le fonctionnement du convertisseur de la figure 1 ou 2 ;
la figure 5 représente, sous forme de blocs, un exemple d'un procédé de sélection d'une plage de fonctionnement d'un convertisseur à commande de phase selon un mode de réalisation ;
la figure 6 représente, sous forme de blocs, un exemple d'un procédé de synchronisation d'un convertisseur à commande de phase selon un mode de réalisation ;
la figure 7 est un diagramme illustrant un exemple de fonctionnement du procédé de synchronisation de la figure 6 ;
la figure 8 est un schéma bloc simplifié représentant un exemple d'un convertisseur à commande de phase selon un mode de réalisation ; et
la figure 9 est un schéma bloc plus détaillé illustrant un exemple d'un convertisseur à commande de phase selon un mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les applications qui peuvent être faites des convertisseurs de puissance décrits n'ont pas été détaillées, les modes de réalisation décrits étant compatibles avec les applications usuelles de convertisseurs de puissance. De plus, les circuits de commande des interrupteurs des étages primaire et secondaire des convertisseurs décrits ne sont pas détaillés, la réalisation de ces circuits de commande étant à la portée de l'homme du métier à partir des indications fonctionnelles de la présente description.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Sauf précision contraire, les expressions "environ", "approximativement", "sensiblement", et "de l'ordre de" signifient à 10 % près, de préférence à 5 % près.

Selon un aspect des modes de réalisation décrits, on prévoit de réaliser un convertisseur de puissance à commande de phase comprenant un premier circuit de contrôle pour commander l'étage primaire, et un deuxième circuit de contrôle pour commander l'étage secondaire, les premier et deuxième circuits de contrôle étant entièrement séparés l'un de l'autre, sans communication directe entre les deux circuits.

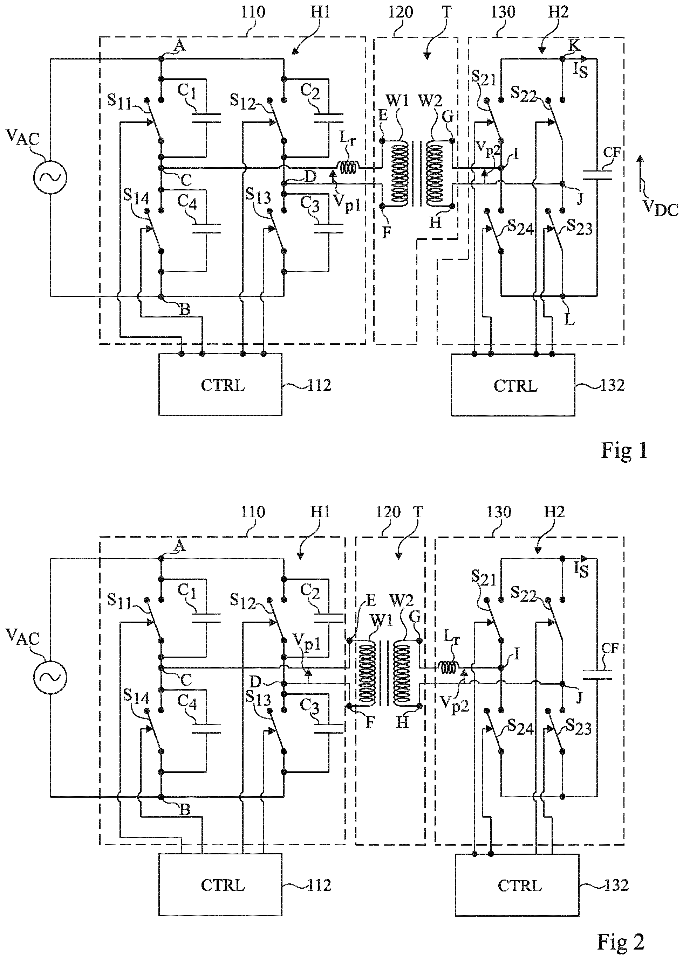

La figure 1 est un schéma électrique d'un exemple d'un convertisseur de puissance à commande de phase selon un mode de réalisation. On considère dans cet exemple un convertisseur alternatif-continu (AC/DC).

Le convertisseur de la figure 1 comprend un étage primaire 110, suivi d'un étage isolation 120, suivi d'un étage secondaire 130.

Dans cet exemple, l'étage primaire 110 comprend un premier pont en H commandé H1, ou pont primaire, et une inductance série Lᵣ, l'étage d'isolation 120 comprend un transformateur T, et l'étage secondaire 130 comprend un deuxième pont en H commandé H2, ou pont secondaire.

Le pont H1 est constitué de quatre interrupteurs commandés S₁₁, S₁₂, S₁₃ et S₁₄, par exemple identiques aux dispersions de fabrication près, comportant chacun deux noeuds de conduction principaux et au moins un noeud de commande. Les interrupteurs S₁₁ et S₁₄ sont reliés en série, par leurs noeuds de conduction, entre des noeuds d'entrée A et B du pont. Les interrupteurs S₁₂ et S₁₃ sont reliés en série, par leurs noeuds de conduction, entre les noeuds A et B, en parallèle de la branche comprenant les interrupteurs S₁₁ et S₁₄. Le point milieu C entre les interrupteurs S₁₁ et S₁₄ définit un premier noeud de sortie du pont, et le point milieu D entre les interrupteurs S₁₂ et S₁₃ définit un deuxième noeud de sortie du pont. Plus particulièrement, dans l'exemple représenté, l'interrupteur S₁₁ a un premier noeud de conduction connecté au noeud A et un deuxième noeud de conduction connecté au noeud C, l'interrupteur S₁₄ a un premier noeud de conduction connecté au noeud C et un deuxième noeud de conduction connecté au noeud B, l'interrupteur S₁₂ a un premier noeud de conduction connecté au noeud A et un deuxième noeud de conduction connecté au noeud D, et l'interrupteur S₁₃ a un premier noeud de conduction connecté au noeud D et un deuxième noeud de conduction connecté au noeud B. Dans cet exemple, les interrupteurs S₁₁, S₁₂, S₁₃ et S₁₄ sont bidirectionnels en courant et en tension.

Les noeuds d'entrée A et B du pont H1 reçoivent directement, c'est-à-dire sans étage intermédiaire de redressement à diodes, la tension alternative d'entrée V_{AC} du convertisseur, par exemple une tension sinusoïdale de fréquence de l'ordre de 50 ou 60 Hz, par exemple la tension secteur.

Dans cet exemple, l'étage primaire 110 comprend en outre quatre condensateurs C₁, C₂, C₃, C₄, par exemple identiques aux dispersions de fabrication près, reliés respectivement en parallèles des interrupteurs S₁₁, S₁₂, S₁₃, S₁₄ du pont H1. Plus particulièrement, chaque condensateur Cᵢ, avec i entier allant de 1 à 4, a ses électrodes connectées respectivement aux noeuds de conduction de l'interrupteur S₁ᵢ de même indice i. A titre de variante, les condensateurs C₁, C₂, C₃, C₄ peuvent être omis, les capacités C₁, C₂, C₃, C₄ étant alors constituées uniquement par les capacités parasites des interrupteurs S₁₁, S₁₂, S₁₃, S₁₄.

Le transformateur T comprend un enroulement primaire W1 et un enroulement secondaire W2 couplés magnétiquement.

Les extrémités E et F de l'enroulement primaire W1 sont reliées respectivement aux noeuds C et D de sortie du pont H1. Plus particulièrement, dans l'exemple représenté, l'extrémité E de l'enroulement primaire W1 est reliée au noeud C par l'intermédiaire de l'inductance Lᵣ, et l'extrémité F de l'enroulement primaire W1 est connectée au noeud D. Dans l'exemple représenté, l'inductance Lᵣ a une première extrémité connectée au noeud E et une deuxième extrémité connectée au noeud C. L'inductance Lᵣ peut être un composant inductif spécifiquement connecté à l'enroulement primaire W1, ou être constituée uniquement par l'inductance de fuite du transformateur.

Le pont H2 est constitué de quatre interrupteurs commandés S₂₁, S₂₂, S₂₃ et S₂₄, par exemple identiques aux dispersions de fabrication près, comportant chacun deux noeuds de conduction principaux et au moins un noeud de commande. Les interrupteurs S₂₁, S₂₂, S₂₃ et S₂₄ sont par exemple des interrupteurs quasi-bidirectionnels, c'est-à-dire adaptés à laisser circuler du courant dans les deux sens, mais ne permettant un contrôle du courant que dans un sens, c'est-à-dire ne pouvant être commandés à l'état bloqué que lorsqu'une tension d'une polarité déterminée est appliquée entre leurs noeuds de conduction (autrement dit des interrupteurs bidirectionnels en courant mais unidirectionnels en tension). Les interrupteurs S₂₁ et S₂₂ sont reliés en série, par leurs noeuds de conduction, entre des noeuds d'entrée I et J du pont. Les interrupteurs S₂₃ et S₂₄ sont reliés en série, par leurs noeuds de conduction, entre les noeuds I et J, en parallèle de la branche comprenant les interrupteurs S₁₂ et S₂₂. Le point milieu K entre les interrupteurs S₂₁ et S₂₂ définit un premier noeud de sortie du pont, et le point milieu L entre les interrupteurs S₂₃ et S₂₄ définit un deuxième noeud de sortie du pont. Plus particulièrement, dans l'exemple représenté, l'interrupteur S₂₁ a un premier noeud de conduction connecté au noeud I et un deuxième noeud de conduction connecté au noeud K, l'interrupteur S₂₂ a un premier noeud de conduction connecté au noeud J et un deuxième noeud de conduction connecté au noeud K, l'interrupteur S₂₄ a un premier noeud de conduction connecté au noeud I et un deuxième noeud de conduction connecté au noeud L, et l'interrupteur S₂₃ a un premier noeud de conduction connecté au noeud L et un deuxième noeud de conduction connecté au noeud J.

Les noeuds d'entrée I et J du pont H2 sont reliés respectivement aux extrémités G et H de l'enroulement secondaire W2 du transformateur T. Dans l'exemple représenté, l'extrémité G de l'enroulement W2 est connectée au noeud I et l'extrémité H de l'enroulement W2 est connectée au noeud J.

Dans l'exemple de la figure 1, le convertisseur comprend en outre un condensateur de filtrage de sortie CF, en sortie du pont H2. Dans l'exemple représenté, les électrodes du condensateur CF sont connectées respectivement aux noeuds K et L de sortie du pont H2, qui forment des noeuds de fourniture de la tension continue de sortie V_{DC} du convertisseur.

Dans l'exemple de la figure 1, le convertisseur comprend un circuit de contrôle 112 (CTRL) de l'étage primaire 110, adapté à commander les interrupteurs S₁₁, S₁₂, S₁₃, S₁₄ du pont primaire H1, et un circuit de contrôle 132 (CTRL) de l'étage secondaire 130, adapté à commander les interrupteurs S₂₁, S₂₂, S₂₃, S₂₄ du pont secondaire H2.

Les circuits de contrôle 112 et 132 sont entièrement séparés l'un de l'autre. Autrement dit, les circuits de contrôle 112 et 132 sont reliés l'un à l'autre uniquement par l'intermédiaire de l'étage d'isolation 120, constitué dans cet exemple par le transformateur T.

Bien que non détaillé sur la figure, le circuit de contrôle 112 peut comprendre des circuits de mesure de tensions et/ou de courants au sein de l'étage primaire, et des circuits adaptés à traiter les données fournies par les circuits de mesure et à générer en conséquence des signaux de commande des interrupteurs S₁₁, S₁₂, S₁₃, S₁₄ de l'étage primaire. De façon similaire, le circuit de contrôle 132 peut comprendre des circuits de mesure de tensions et/ou de courants au sein de l'étage secondaire, et des circuits adaptés à traiter les données fournies par les circuits de mesure et à générer en conséquence des signaux de commande des interrupteurs S₂₁, S₂₂, S₂₃, S₂₄ de l'étage secondaire.

La figure 2 est un schéma électrique illustrant une variante de réalisation du convertisseur de la figure 1.

Le convertisseur de la figure 2 diffère du convertisseur de la figure 1 principalement en ce que, dans le convertisseur de la figure 2, l'inductance Lᵣ placée en série du transformateur T se trouve dans l'étage secondaire 130 et non plus dans l'étage primaire 110. Plus particulièrement, dans l'exemple de la figure 2, l'extrémité G de l'enroulement secondaire W2 du transformateur T n'est pas directement connectée au noeud d'entré I du pont secondaire H2, mais est reliée au noeud I par l'intermédiaire de l'inductance Lᵣ. Dans l'exemple représenté, l'inductance Lᵣ a une première extrémité connectée au noeud G et une deuxième extrémité connectée au noeud I. Côté étage primaire 110, l'extrémité E de l'enroulement primaire W1 peut être connectée au noeud de sortie C du pont primaire H1.

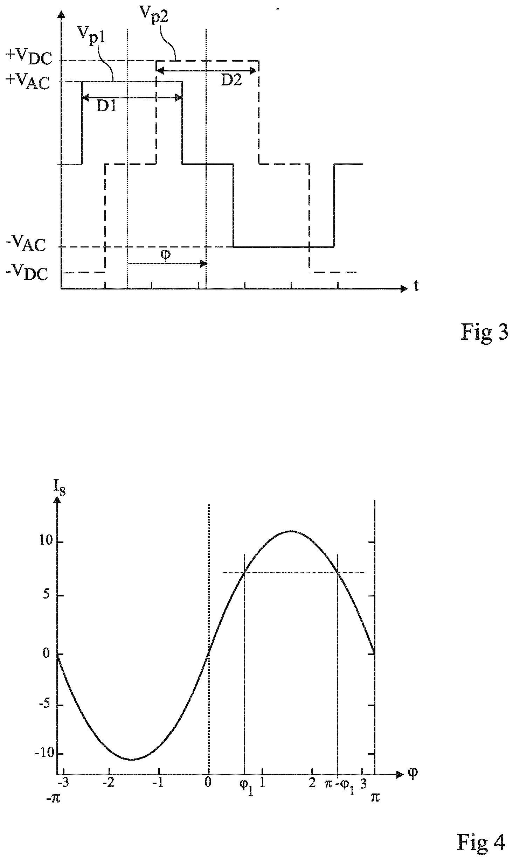

La figure 3 est un diagramme illustrant le fonctionnement du convertisseur de la figure 1 ou 2. La figure 3 représente plus particulièrement l'évolution, en fonction du temps t (en abscisse), de la tension Vₚ₁ (en trait plein) entre les noeuds de sortie C et D du pont primaire H1 du convertisseur, et de la tension Vₚ₂ (en trait interrompu) entre les noeuds d'entrée I et J du pont secondaire H2 du convertisseur. Dans cet exemple, les ponts primaire H1 et secondaire H2 sont commandés sensiblement à la même fréquence. On notera que dans l'exemple de la figure 3, du fait de la fréquence de commutation relativement élevée des interrupteurs des ponts H1 et H2, la tension d'entrée V_{AC} est considérée sensiblement constante pendant un cycle de commutation du pont H1 ou H2. A titre d'exemple, la fréquence de commutation des interrupteurs des ponts H1 et H2 est au moins dix fois et de préférence au moins vingt fois supérieure à la fréquence de la tension alternative d'entrée V_{AC} du convertisseur. A titre d'exemple, la fréquence de commutation des interrupteurs des ponts H1 et H2 est comprise entre 10 kHz et 10 MHz, par exemple entre 100 kHz et 1 MHz.

Dans l'exemple représenté, la commande du pont H1 est une commande à quatre phases. Plus particulièrement, chaque cycle de commande du pont H1 comporte les phases consécutives suivantes :
- une première phase pendant laquelle les interrupteurs S₁₁ et S₁₂ sont maintenus fermés et les interrupteurs S₁₃ et S₁₄ sont maintenus ouverts, ou pendant laquelle les interrupteurs S₁₃ et S₁₄ sont maintenus fermés et les interrupteurs S₁₁ et S₁₂ sont maintenus ouverts (Vₚ₁ = 0) ;
- une deuxième phase pendant laquelle les interrupteurs S₁₁ et S₁₃ sont maintenus fermés et les interrupteurs S₁₂ et S₁₄ sont maintenus ouverts (Vₚ₁ = +V_{AC}) ;
- un troisième phase pendant laquelle les interrupteurs S₁₁ et S₁₂ sont maintenus fermés et les interrupteurs S₁₃ et S₁₄ sont maintenus ouverts, ou pendant laquelle les interrupteurs S₁₃ et S₁₄ sont maintenus fermés et les interrupteurs S₁₁ et S₁₂ sont maintenus ouverts (Vₚ₁, = 0) ; et
- une quatrième phase pendant laquelle les interrupteurs S₁₂ et S₁₄ sont maintenus fermés et les interrupteurs S₁₁ et S₁₃ sont maintenus ouverts (Vₚ₁ = -V_{AC}).

De façon similaire, dans cet exemple, la commande du pont H2 est une commande à quatre phases. Plus particulièrement, chaque cycle de commande du pont H2 comporte les phases consécutives suivantes :
- une première phase pendant laquelle les interrupteurs S₂₁ et S₂₂ sont maintenus fermés et les interrupteurs S₂₃ et S₂₄ sont maintenus ouverts, ou pendant laquelle les interrupteurs S₂₃ et S₂₄ sont maintenus fermés et les interrupteurs S₂₁ et S₂₂ sont maintenus ouverts (Vₚ₂ = 0) ;
- une deuxième phase pendant laquelle les interrupteurs S₂₁ et S₂₃ sont maintenus fermés et les interrupteurs S₂₂ et S₂₄ sont maintenus ouverts (V_{P2} = +V_{DC}) ;
- un troisième phase pendant laquelle les interrupteurs S₂₁ et S₂₂ sont maintenus fermés et les interrupteurs S₂₃ et S₂₄ sont maintenus ouverts, ou pendant laquelle les interrupteurs S₂₃ et S₂₄ sont maintenus fermés et les interrupteurs S₂₁ et S₂₂ sont maintenus ouverts (Vₚ₂ = 0) ; et
- une quatrième phase pendant laquelle les interrupteurs S₂₂ et S₂₄ sont maintenus fermés et les interrupteurs S₂₁ et S₂₃ sont maintenus ouverts (Vₚ₂ = -V_{DC}).

La commutation des ponts H1 et H2 conduit à générer un courant alternatif haute fréquence au niveau du transformateur T, permettant un transfert de puissance de l'étage primaire vers l'étage secondaire ou de l'étage secondaire vers l'étage primaire. On notera que bien que, dans l'exemple illustré par la figure 3, la commande des ponts H1 et H2 soit une commande à quatre phases imposant des tensions alternatives Vₚ₁ et Vₚ₂ à trois niveaux, les modes de réalisation décrits ne se limitent pas à ce cas particulier. A titre de variante, la commande des ponts H1 et H2 peut être une commande à deux phases (correspondant respectivement aux deuxième et quatrième phases des exemples décrits ci-dessus), aussi appelée commande pleine onde, conduisant à générer des tensions alternatives Vₚ₁ et Vₚ₂ à deux niveaux. Les phases de l'exemple de la figure 3 dans lesquelles Vₚ₁ = 0 et Vₚ₂ = 0 sont alors omises.

Le transfert de puissance entre le primaire et le secondaire est affecté par trois variables de commande indépendantes, à savoir le déphasage entre les deux bras du pont primaire H1 définissant un rapport cyclique D1 sur la tension modulée Vₚ₁, le déphasage entre les deux bras du pont secondaire H2 définissant un rapport cyclique D2 sur la tension modulée Vₚ₂, et le déphasage ϕ entre la commande du pont primaire H1 et la commande du pont secondaire H2.

En pratique, la variable ϕ est particulièrement intéressante pour contrôler le transfert de puissance sans induire des contraintes trop importantes dans le convertisseur.

La figure 4 est un diagramme illustrant le courant de sortie Iₛ (en ordonnée) du convertisseur en fonction du déphasage ϕ (en abscisse), en supposant D1 et D2 fixes.

Le domaine de définition du déphasage ϕ est l'intervalle [-π ; π]. Comme cela apparaît sur la figure 4, le courant Iₛ est nul (pas de transfert de puissance) pour un déphasage ϕ=0, le courant le courant Is est positif (transfert de puissance du primaire vers le secondaire) lorsque le déphasage ϕ est compris dans la plage [0 ; π], et le courant Iₛ est négatif (transfert de puissance du secondaire vers le primaire) lorsque le déphasage ϕ est compris dans la plage [-π ; 0]. Autrement dit, le signe du déphasage ϕ donne le sens du transfert de puissance.

L'évolution du courant Iₛ est symétrique par rapport à la valeur ϕ=0. De plus, comme cela apparaît sur la figure 2, dans la plage [0 ; π], l'évolution du courant Iₛ est symétrique par rapport à la valeur ϕ=π/2, et, dans la plage [-π ; 0], l'évolution du courant Iₛ est symétrique par rapport à la valeur ϕ=-π/2.

Dans l'exemple représenté, le courant Iₛ varie de façon sensiblement sinusoïdale lorsque le déphasage ϕ varie de -π à π.

Pour une même valeur de courant de sortie Iₛ souhaitée, il existe deux valeurs de déphasage ϕ1 et π-ϕ1, et donc deux points de fonctionnement du convertisseur, permettant d'obtenir le transfert de puissance visé. En pratique, l'un des deux points de fonctionnement est à privilégier car il permet de minimiser les pertes et d'obtenir de meilleures performances de conversion. Plus particulièrement, pour obtenir de bonnes performance de conversion, il convient de préférence de placer le déphasage ϕ dans la plage [0 ; π/2] pour un transfert de puissance de l'étage primaire vers l'étage secondaire, et dans la plage [-π/2 ; 0] pour un transfert de puissance de l'étage secondaire vers l'étage primaire.

Dans un convertisseur du type décrit en relation avec les figures 1 et 2, une difficulté est que, en l'absence de communication directe entre le circuit de contrôle 112 de l'étage primaire et le circuit de contrôle 132 de l'étage secondaire, au démarrage du convertisseur, ni le circuit de contrôle 112 ni le circuit de contrôle 132 ne sait dans quelle plage se situe le déphasage ϕ.

Selon un aspect d'un mode de réalisation, le circuit de contrôle 132 de l'étage secondaire est adapté à mettre en oeuvre un procédé de sélection de plage de fonctionnement permettant d'identifier la plage de fonctionnement dans laquelle se situe le déphasage ϕ, et, si nécessaire, de modifier le déphasage ϕ en lui ajoutant un angle fixe prédéterminé de façon à replacer le déphasage ϕ dans la plage de fonctionnement optimale pour le fonctionnement du convertisseur.

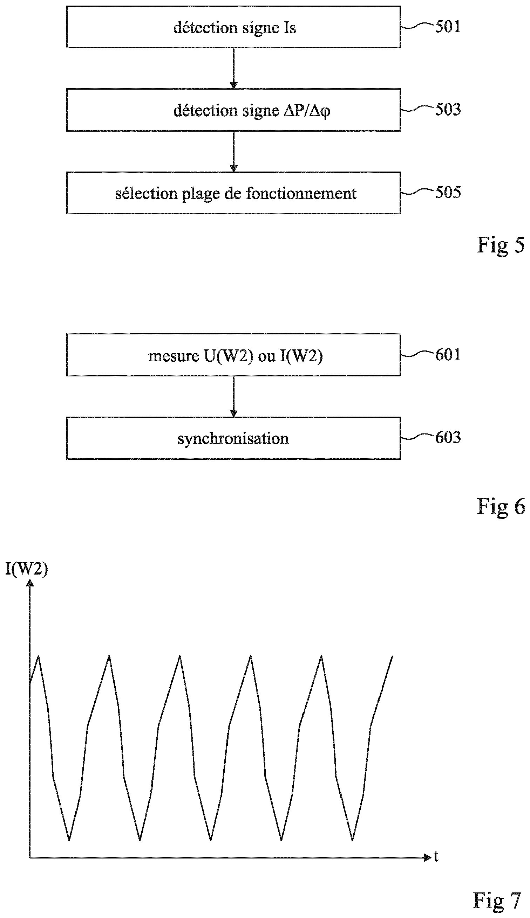

La figure 5 représente, sous forme de blocs, un exemple d'un procédé de sélection de plage de fonctionnement mis en oeuvre par le circuit de contrôle 132 de l'étage secondaire.

En l'absence de synchronisation entre les étages primaire et secondaire, le déphasage initial peut prendre une valeur ϕ=ϕᵢₙᵢₜ quelconque dans la plage [-π ; π].

Le procédé comprend une étape 501 de mesure du courant de sortie Iₛ du convertisseur. Si le courant Iₛ mesuré est positif, cela signifie que le déphasage ϕ=ϕᵢₙᵢₜ se situe dans la plage [0 ; π] et que le convertisseur réalise un transfert de puissance de l'étage primaire vers l'étage secondaire. Si le courant Iₛ mesuré est négatif, cela signifie que le déphasage ϕ=ϕᵢₙᵢₜ se situe dans la plage [-π ; 0] et que le convertisseur réalise un transfert de puissance de l'étage secondaire vers l'étage primaire.

Lors d'une étape 502 postérieure à l'étape 501, le circuit de contrôle 132 applique une variation locale de phase Δϕ aux signaux de commande du pont secondaire H2. Le déphasage ϕ prend alors une valeur ϕ1=ϕᵢₙᵢₜ+Δϕ. Lors de l'étape 502, le circuit de contrôle 132 mesure en outre la variation de puissance ΔP en sortie du convertisseur, provoquée par l'application de la variation locale de phase Δϕ. Le circuit de contrôle 132 détermine alors le signe du rapport ΔP/Δϕ. Connaissant la courbe de transfert de puissance du convertisseur, par exemple telle qu'illustrée en figure 4, et connaissant le signe du courant Iₛ pour la valeur initiale de déphasage ϕᵢₙᵢₜ, ceci permet de déterminer dans quelle plage de fonctionnement se situe le déphasage ϕ=ϕ1 parmi les plages [-π ; -π/2], [-π/2 ; 0], [0 ; π/2] et [π/2 ; π].

Plus particulièrement, dans l'exemple de la figure 4 :
- si le signe du courant Iₛ déterminé à l'étape 501 est positif et si le signe du rapport ΔP/Δϕ déterminé à l'étape 502 est négatif, cela signifie que déphasage ϕ=ϕ1 se situe dans la plage [π/2 ; π] ;
- si le signe du courant Iₛ déterminé à l'étape 501 est positif et si le signe du rapport ΔP/Δϕ déterminé à l'étape 502 est positif, cela signifie que déphasage ϕ=ϕ1 se situe dans la plage [0 ; π/2] ;
- si le signe du courant Iₛ déterminé à l'étape 501 est négatif et si le signe du rapport ΔP/Δϕ déterminé à l'étape 502 est positif, cela signifie que déphasage ϕ=ϕ1 se situe dans la plage [-π/2 ; 0] ; et
- si le signe du courant Iₛ déterminé à l'étape 501 est négatif et si le signe du rapport ΔP/Δϕ déterminé à l'étape 502 est négatif, cela signifie que déphasage ϕ=ϕ1 se situe dans la plage [-π ; -π/2].

Lors d'une étape 503 postérieure à l'étape 502, en fonction du signe du courant Iₛ déterminé à l'étape 501 et du signe du rapport ΔP/Δϕ déterminé à l'étape 502, le circuit 132 applique aux signaux de commande du pont secondaire H2 un déphasage fixe prédéterminé permettant de placer le convertisseur dans la plage de fonctionnement désirée.

On suppose ici, à titre d'exemple, que l'on souhaite réaliser un transfert de puissance positif de l'étage primaire vers l'étage secondaire. Pour cela, pour obtenir de bonnes performances de conversion, il convient que le déphasage ϕ soit situé dans la plage [0 ; π/2].

Ainsi, dans cet exemple :
si le signe du courant Iₛ déterminé à l'étape 501 est positif et si le signe du rapport ΔP/Δϕ déterminé à l'étape 502 est négatif, le circuit de contrôle 132 applique aux signaux de commande du pont H2 un déphasage de -π/2. Le déphasage ϕ prend alors une valeur ϕ2 = ϕ1-π/2 ;
- si le signe du courant Iₛ déterminé à l'étape 501 est positif et si le signe du rapport ΔP/Δϕ déterminé à l'étape 502 est positif, le circuit de contrôle 132 n'applique aucun déphasage aux signaux de commande du pont H2 ;
- si le signe du courant Iₛ déterminé à l'étape 501 est négatif et si le signe du rapport ΔP/Δϕ déterminé à l'étape 502 est positif, le circuit de contrôle 132 applique aux signaux de commande du pont H2 un déphasage de π/2. Le déphasage ϕ prend alors une valeur ϕ2 = ϕ1+π/2 ; et
- si le signe du courant Iₛ déterminé à l'étape 501 est négatif et si le signe du rapport ΔP/Δϕ déterminé à l'étape 502 est négatif, le circuit de contrôle 132 applique aux signaux de commande du pont H2 un déphasage de π. Le déphasage ϕ prend alors une valeur ϕ2 = ϕ1+π.

A titre de variante, à l'étape 501, la tension de sortie V_{DC} du convertisseur peut en outre être mesurée. Si, au démarrage du convertisseur, la tension V_{DC} et le courant Iₛ sont nuls, on peut directement en déduire que le déphasage ϕ=ϕᵢₙᵢₜ se situe dans la plage [-π ; 0]. Le circuit de contrôle 132 peut alors directement appliquer un déphasage de π aux signaux de commande du pont H2. Les étapes 502 et 503 peuvent ensuite être mises en oeuvre de façon similaire à ce qui a été décrit ci-dessus. Ceci permet avantageusement de commencer à charger le condensateur de sortie CF dès l'étape 501, sans attendre l'achèvement de l'étape 503.

Plus généralement, si l'on souhaite réaliser un transfert de puissance positif de l'étage primaire vers l'étage secondaire et que, à l'étape 501, le circuit 132 détermine que le déphasage ϕ=ϕᵢₙᵢₜ se situe dans la plage [-π ; 0], le circuit 132 peut directement appliquer un déphasage égal à π aux signaux de commande du pont secondaire H2, avant de mettre en oeuvre les étapes 502 et 503. De façon similaire, si l'on souhaite réaliser un transfert de puissance positif de l'étage secondaire vers l'étage primaire et que, à l'étape 501, le circuit 132 détermine que le déphasage ϕ=ϕᵢₙᵢₜ se situe dans la plage [0 ; π], le circuit 132 peut directement appliquer un déphasage égal à -π aux signaux de commande du pont secondaire H2, puis mettre en oeuvre les étapes 502 et 503.

Par ailleurs, à titre de variante, au lieu de mesurer la variation de puissance ΔP en sortie du convertisseur, provoquée par l'application de la variation locale de phase Δϕ, le circuit de contrôle 132 mesure une variation ΔIs du courant de sortie du convertisseur. Le circuit de contrôle 132 détermine alors le signe du rapport ΔIs/Δϕ. Le procédé est alors mis en oeuvre de façon similaire à ce qui a été décrit ci-dessus, en remplaçant le signe du rapport ΔP/Δϕ par le signe du rapport ΔIs/Δϕ.

Le procédé de sélection de plage de fonctionnement de la figure 5 peut par exemple être réitéré à chaque démarrage du convertisseur, ou à tout autre moment.

Une fois le déphasage ϕ placé dans le bonne plage de fonctionnement, le circuit de contrôle 132 de l'étage secondaire régule la puissance de sortie du convertisseur en jouant sur la phase des signaux de commande du pont secondaire H2 (et donc sur le déphasage ϕ dans la mesure où la phase de signaux de commande du pont primaire H1 reste inchangée). A titre d'exemple, le circuit de contrôle 132 détermine une consigne de phase du pont secondaire H2, qui est issue d'une boucle de régulation sur la tension de sortie V_{DC} du convertisseur. Pour réaliser cette régulation, un simple régulateur de type proportionnelle-intégrale (PI) peut être utilisé.

Pour certaines applications, il convient par ailleurs de commander le convertisseur de façon à assurer une aborption sinusoïdale du courant d'entrée. Pour cela, il convient de synchroniser la commande sur la tension alternative d'entrée V_{AC}.

Dans un premier exemple de réalisation, la gestion de l'absorption sinusoïdale du courant est mise en oeuvre par le circuit de contrôle 112 de l'étage primaire, pour lequel la tension V_{AC} est directement accessible. Le circuit de contrôle 112 fait alors varier le rapport cyclique D1 du pont primaire H1 de façon à assurer une absorption sinusoïdale du courant d'entrée.

Dans un deuxième exemple de réalisation, la gestion de l'absorption sinusoïdale du courant est mise en oeuvre par le circuit de contrôle 132 de l'étage secondaire, pour lequel la tension V_{AC} n'est pas directement accessible.

Dans ce cas, le circuit de contrôle 112 commande le pont primaire selon une commande pleine onde, sans variation du rapport cyclique D1. La tension haute fréquence Vp1 imposée par le pont primaire H1 est alors une tension carrée, avec une modulation d'amplitude basse fréquence par la source alternative d'entrée. Par des mesures de tension et/ou de courant en sortie du transformateur T, le circuit de contrôle 132 de l'étage secondaire détecte des périodes dites mortes, correspondant à des passages de la tension d'entrée V_{AC} sous une valeur seuil, par exemple une tension de l'ordre de 30 volts (en valeur absolue). Ceci permet d'avoir une synchronisation au double de la fréquence de la tension d'entrée V_{AC} (c'est-à-dire à la fréquence de la tension V_{AC} redressée). Le circuit de contrôle 132 fait alors varier le rapport cyclique D2 du pont secondaire H2 de façon à assurer une absorption sinusoïdale du courant d'entrée.

Dans le cas où l'inductance série Lᵣ est placée au secondaire (configuration de la figure 2), une image de la tension Vₚ₁ imposée par le primaire est accessible par le circuit de contrôle 132 aux bornes de l'enroulement secondaire W2 du transformateur. Dans ce cas, la détection des périodes mortes (correspondant aux passages à zéro de la tension d'entrée V_{AC}) par le circuit 132 peut être réalisée uniquement sur la base d'une mesure de la tension de sortie U(W2) du transformateur T.

Dans le cas où l'inductance série Lᵣ est placée au primaire (configuration de la figure 1), la tension Vₚ₁ n'est pas accessible en sortie du transformateur T. Dans ce cas, la détection des périodes mortes par le circuit 132 peut être réalisée par une mesure du courant I(W2) au secondaire du transformateur T.

Dans un convertisseur du type décrit en relation avec les figures 1 et 2, le circuit de commande primaire 112 et le circuit de commande secondaire 132 ont chacun leur propre circuit de génération d'un signal d'horloge et ne partagent aucune référence temporelle. Dans chaque circuit de commande, le signal d'horloge est utilisé pour le cadencement du circuit et pour la génération des signaux de commandes des interrupteurs de l'étage correspondant. Les générateurs d'horloge des circuits 112 et 132 sont par exemple identiques aux dispersions de fabrication près. Toutefois, en pratique, du fait des dispersions de fabrication d'une part, et des dérives en fonctionnement (température, vieillissement) d'autre part, il existe inévitablement un écart de fréquence entre le signal d'horloge du circuit 112 et le signal d'horloge du circuit 132.

Si cet écart est suffisamment faible, il peut être toléré, la dérive étant compensée uniquement par la boucle de régulation de la tension et/ou du courant de sortie du convertisseur.

Dans le cas particulier d'un convertisseur à absorption sinusoïdale de courant, la tolérance sur l'écart de fréquence des signaux d'horloge en l'absence de compensation spécifique est toutefois relativement faible. En pratique, la boucle de régulation de puissance doit de préférence avoir une dynamique au moins dix fois inférieure à la fréquence de la tension alternative d'entrée V_{AC} pour éviter toute distorsion du courant absorbé. Si la boucle de régulation de puissance doit également corriger la différence de fréquence de découpage entre les deux étages (liée à la différence de fréquence d'horloge entre les circuits de commande 112 et 132) sans distorsion du courant absorbé, alors la différence de fréquence de découpage entre les deux étages, aussi appelée fréquence de battement, doit également être de préférence au moins dix fois inférieure à la fréquence de la tension V_{AC}. Si l'on désigne respectivement par Fd1 et Fd2 la fréquence de découpage des étages primaire et secondaire (c'est-à-dire la fréquence de commutation des interrupteurs des ponts H1 et H2) et par Fb=|Fd2-Fd1| la fréquence de battement entre les deux étages, il conviendra de respecter la relation Fb<F_{AC}/10, où F_{AC} désigne la fréquence de la tension alternative d'entrée V_{AC}. Soit Δ, la précision des circuits de génération d'horloge utilisés dans les circuits de commande 112 et 132, la relation entre la fréquence d'horloge Fc1 du circuit 112 et la fréquence d'horloge Fc2 du circuit 132 peut s'exprimer comme suit : Fc2=Fc1+Δ*Fc1. Les fréquences de découpage Fd1 et Fd2 étant générées à partir des fréquences d'horloge Fc1 et Fc2 respectivement, on retrouve la relation Fd2=Fd1+Δ*Fd1, et donc Fb=Δ*Fd1. Pour respecter la relation Fb<F_{AC}/10 énoncée ci-dessus, il convient donc de respecter la relation Δ<F_{AC}/ (10*Fd1) . Ainsi, plus la fréquence de découpage est élevée, plus les circuits de génération d'horloge doivent être précis.

On notera que dans le cas d'un convertisseur de type continu-continu (DC/DC), la fréquence de la tension d'entrée est nulle, ce qui libère un degré de liberté sur la dynamique de la régulation. Dans ce cas, il est possible de compenser une fréquence de battement plus élevée.

Dans certaines applications, la précision des circuits de génération d'horloge peut être insuffisante pour respecter les contraintes énoncées ci-dessus. Dans ce cas, le circuit de contrôle 132 de l'étage secondaire peut être configuré pour mettre en oeuvre un procédé de synchronisation de l'horloge secondaire sur l'horloge primaire.

La figure 6 représente, sous forme de blocs, un exemple d'un procédé de synchronisation mis en oeuvre par le circuit de contrôle 132 de l'étage secondaire.

Le procédé de synchronisation de la figure 6 comprend une phase 601 de mesure, via le circuit 132, d'un signal représentatif de la tension ou du courant de sortie du transformateur T. Pendant toute la durée de la phase de mesure 601, l'enroulement secondaire W2 du transformateur est court-circuité par l'intermédiaire des interrupteurs du pont secondaire H2. A titre d'exemple, pendant toute la durée de la phase de mesure 601, les interrupteurs S₂₁ et S₂₂ sont maintenus fermés et les interrupteurs S₂₃ et S₂₄ sont maintenus ouverts. A titre de variante, pendant toute la durée de la phase de mesure 601, les interrupteurs S₂₃ et S₂₄ sont maintenus fermés et les interrupteurs S₂₁ et S₂₂ sont maintenus ouverts. Les interrupteurs du pont H1 sont quant à eux commandés en commutation, à la fréquence de découpage du convertisseur.

Lors d'une étape 603, le circuit 132 détecte, à partir du signal mesuré à l'étape 601, la séquence de commande des interrupteurs du pont primaire H1. Le circuit 132 peut alors synchroniser les signaux de commande des interrupteurs du pont secondaire H2 par rapport à la séquence de commande du pont primaire H1.

Plus particulièrement, dans le cas où l'inductance série Lᵣ du convertisseur est placée coté étage secondaire (configuration de la figure 2), le signal mesuré à l'étape 601 peut être directement la tension U(W2) aux bornes de l'enroulement secondaire W2. En effet, dans cette configuration, la tension U(W2) est une image de la tension modulée Vp1 fournie par le pont primaire H1, par exemple telle qu'illustrée sur la figure 3, au rapport de transformation du transformateur T près. Le circuit 132 peut comporter un détecteur de fronts permettant de générer un signal d'horloge à partir de la tension U(W2). Ce signal d'horloge est alors utilisé à l'étape 603 pour synchroniser la commande du pont secondaire H2 par rapport à la commande du pont primaire H1.

Dans le cas où l'inductance série Lᵣ du convertisseur est placée coté étage primaire (configuration de la figure 1), le signal mesuré à l'étape 601 peut être le courant I(W2) dans l'enroulement secondaire W2 du transformateur T. En effet, dans cette configuration, une image de la tension Vₚ₁ n'est pas directement accessible côté étage secondaire. Le courant I(W2) est alors de forme trapézoïdale, les passages par zéro du courant I(W2) correspondant aux instants 0 et π référencés par rapport au primaire. Le circuit 132 peut détecter les passages à zéro du courant I(W2) et générer un signal d'horloge à partir de cette détection. Ce signal d'horloge est utilisé à l'étape 603 pour synchroniser la commande du pont secondaire H2 par rapport à la commande du pont primaire H1.

Le procédé de synchronisation de la figure 6 peut par exemple être réitéré périodiquement, à une fréquence prédéterminée fonction de la précision des circuits de génération des signaux d'horloge des circuits 112 et 132. A titre de variante, le procédé de la figure 6 peut être mis en oeuvre à la demande, à tout moment souhaité.

La figure 7 est un diagramme représentant, à titre d'exemple illustratif, l'évolution, en fonction du temps t (en abscisse), du courant I(W2) dans l'enroulement secondaire W2 du transformateur T dans le cas d'une commande à quatre phases telle que décrite en relation avec la figure 3.

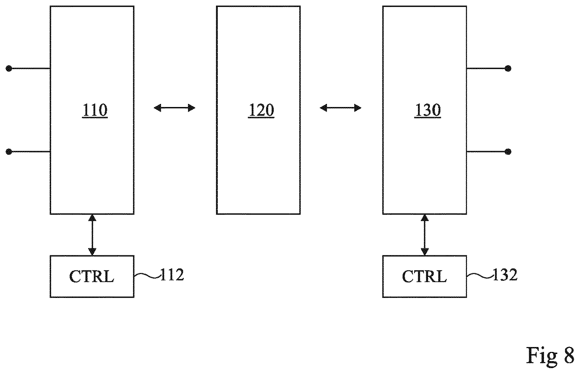

La figure 8 est un schéma bloc simplifié représentant de façon plus générale un exemple d'un convertisseur à commande de phase selon un mode de réalisation.

Dans les exemples décrits en relation avec les figures 1 à 7, le convertisseur est un convertisseur AC/DC à conversion directe. Plus généralement, l'homme du métier saura adapter les modes de réalisation décrits à tout type de convertisseur à découpage à commande de phase.

Dans l'exemple de la figure 8, l'étage primaire 110 comporte au moins un interrupteur de découpage (non détaillé sur la figure) et est destiné à être connecté en entrée à une source de tension alternative, à une source de courant alternatif, à une source de tension continue ou à une source de courant continu.

L'étage secondaire 130 comporte au moins un interrupteur de découpage (non détaillé sur la figure) et est destiné à fournir une tension alternative, un courant alternatif, une tension continue, ou un courant continu.

L'étage d'isolation 120 peut comporter un transformateur, ou tout autre élément adapté à assurer la transmission de la puissance électrique modulée entre le primaire et le secondaire avec isolation, galvanique ou non, entre l'étage primaire et l'étage secondaire. A titre d'exemple, l'étage d'isolation 120 est constitué par deux condensateurs de liaison assurant une isolation statique.

Le convertisseur peut être unidirectionnel, c'est-à-dire adapté à transférer de l'énergie du primaire vers le secondaire uniquement, ou bidirectionnel, c'est-à-dire adapté à transférer de l'énergie, au choix, du primaire vers le secondaire ou du secondaire vers le primaire.

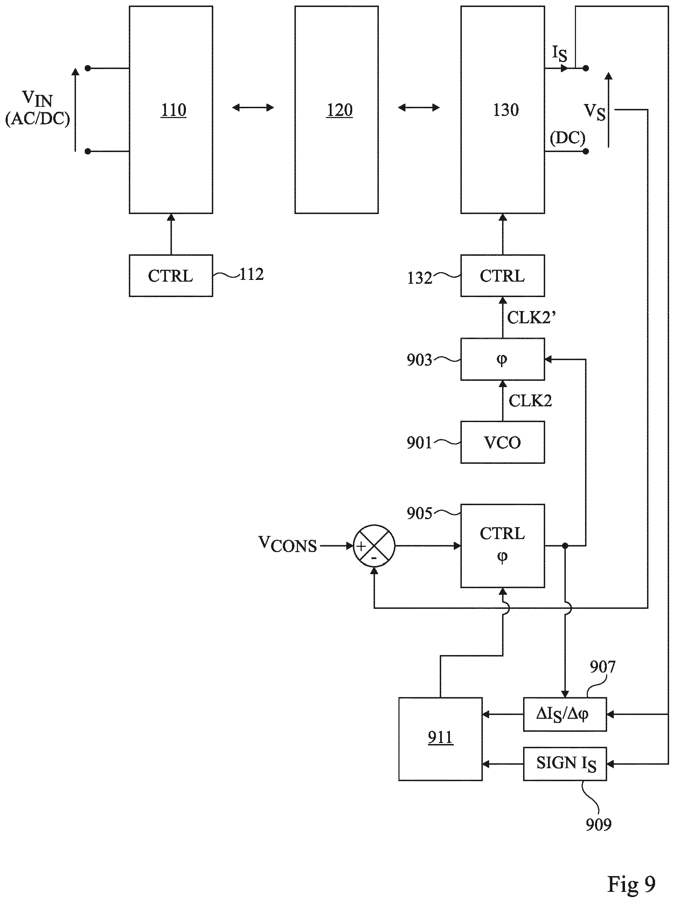

La figure 9 est un schéma bloc illustrant plus en détail un exemple d'un convertisseur à commande de phase selon un mode de réalisation.

La figure 9 reprend les éléments de la figure 8.

Dans cet exemple, la tension d'entrée V_{IN} du convertisseur peut être une tension alternative ou une tension continue, et la tension de sortie Vₛ du convertisseur est une tension continue.

Sur la figure 9, on a représenté, côté secondaire, un circuit 901 (VCO) adapté à générer un signal d'horloge CLK2. Le circuit 901 est par exemple couplé à un élément oscillant de référence (non détaillé), par exemple un oscillateur à quartz, permettant de fixer la fréquence du signal CLK2 comme cela est couramment utilisé.

On a de plus représenté sur la figure 9 un circuit 903 (ϕ) adapté à générer un signal d'horloge CLK2' de même fréquence que le signal CLK2 mais présentant un déphasage contrôlé par rapport au signal CLK2. Le signal CLK2' est fourni au circuit de contrôle 132 et sert de signal d'horloge pour le cadencement de l'étage secondaire.

On a en outre représenté sur la figure 9 un circuit 905 (CTRL ϕ) adapté à commander le déphasage ϕ introduit par le circuit 903.

Le circuit 905 reçoit en entrée un signal représentatif de la différence entre une tension de consigne V_{CONS} et la tension de sortie V_{S} du convertisseur, et contrôle en conséquence le déphasage ϕ.

Dans le mode de réalisation de la figure 9, le convertisseur comprend un circuit 907 configuré pour déterminer le signe du courant I_{S} (étape 501 du procédé de la figure 5).

Le convertisseur de la figure 9 comprend en outre un circuit 909 configuré pour déterminer le signe du rapport ΔIₛ/Δϕ (étape 502 du procédé de la figure 5).

Le convertisseur de la figure 9 comprend de plus un circuit 911 configuré pour, à partir des signaux de sortie des circuits 907 et 909, déterminer la plage de fonctionnement du convertisseur. En fonction de la plage de fonctionnement identifiée, le circuit 911 commande le circuit 905 pour, le cas échéant, modifier le déphasage ϕ introduit par le circuit 903 de façon à changer de plage de fonctionnement (étape 503 du procédé de la figure 5). Le circuit 911 peut également commander une légère variation du déphasage ϕ (étape 502 du procédé de la figure 5) pour appliquer un Δϕ utile dans le calcul de ΔIs/Δϕ.

Selon un mode de réalisation, non illustré, il est possible de venir recaler le circuit (VCO) 901 à un moment donné en appliquant le procédé de synchronisation illustré en figure 6. Pour ce faire, le circuit de contrôle 132 applique les commandes décrites supra afin de permettre la mesure de U(W2) ou I(W2). Le circuit (VCO) 901 est ensuite recalé, dans sa fréquence et éventuellement sa phase, sur la fréquence de l'étage primaire détectée grâce aux mesures de U(W2) ou I(W2). Un tel recalage peut par exemple se faire au moyen d'un circuit bien connu de type PLL en prenant comme signal de référence le signal de mesure U(W2) ou I(W2). Ce recalage de la fréquence du circuit (VCO) peut être réalisé au démarrage du circuit et éventuellement en cours de fonctionnement par interruption momentanée du fonctionnement standard des éléments représentés en figure 9. Ces interruptions pour resynchronisation des fréquences des étages primaire et secondaire peuvent être prévues à intervalle régulier, ou être déclenché par un bloc d'observation de dérive d'horloge.

Il est par exemple possible de suivre la dérive de la fréquence du circuit secondaire par rapport à celle du circuit primaire en suivant la dérive des données délivrées par les circuits 907 et 909. En effet, quand le signe de Is change ou quand la valeur de ΔIₛ/Δϕ diminue et s'annule, on peut en déduire que l'on change de cadran de fonctionnement. On peut alors décider de lancer un procédé de synchronisation des fréquences des primaire et secondaire.

Alternativement, notamment si on ne dispose pas des fonctions de resynchronisation entre les étages primaire et secondaire, on peut utiliser cette information de changement de cadran pour déclencher un procédé de sélection de plage de fonctionnement tel que décrit supra, notamment en lien avec la figure 5. Si les fréquences des étages primaire et secondaire ne dérivent pas trop vite l'une par rapport à l'autre, alors il est possible de compenser un léger décalage de fréquence en réalisant une sélection de plage de fonctionnement régulièrement, ou sur détection d'un changement de cadran comme susmentionné.

Les modes de réalisation décrits permettent avantageusement de simplifier la réalisation des circuits de contrôle des étages primaire et secondaire en supprimant toute liaison directe entre les éléments de contrôle de l'étage primaire et les éléments de contrôle de l'étage secondaire.

Les modes de réalisation décrits sont tout particulièrement avantageux pour des applications de transmission d'énergie sans fil dans lesquelles les étages primaire et secondaire sont totalement séparés physiquement. Les modes de réalisation décrits peuvent toutefois avoir de nombreuses autres applications, par exemple dans le domaine des alimentations, par exemple les alimentations de type USB Power Delivery (alimentations par liaison USB) qui nécessitent une conversion AC/DC isolée avec absorption sinusoïdale du courant d'entrée.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art qui sont couvertes par la portée des revendications jointes.

## Revendications

1. Convertisseur de puissance comportant :
un étage primaire (110) comportant au moins un premier interrupteur de découpage (S₁₁, S₁₂, S₁₃, S₁₄) ;
un circuit de contrôle (112) adapté à appliquer un premier signal de commande audit au moins un premier interrupteur ;
un étage secondaire (130) comportant au moins un deuxième interrupteur de découpage (S₂₁, S₂₂, S₂₃, S₂₄) ;
un circuit de contrôle (132) adapté à appliquer un deuxième signal de commande audit au moins un deuxième interrupteur et à mesurer un courant (Is) de sortie de l'étage secondaire ; et
un étage de transmission de puissance (120) reliant l'étage primaire (110) à l'étage secondaire (120),
dans lequel le circuit de contrôle (132) de l'étage secondaire est isolé électriquement du circuit de contrôle (112) de l'étage primaire, et dans lequel le circuit de contrôle de l'étage secondaire est configuré pour, lors d'une phase de sélection de plage de fonctionnement au démarrage du convertisseur, déterminer, à partir d'une mesure du courant (Is) de sortie de l'étage secondaire ou d'une puissance de sortie de l'étage secondaire, dans quelle plage de fonctionnement parmi les plages [-π ; - π/2], [-π/2 ; 0], [0 ; π/2] et [π/2 ; π] se situe un déphasage ϕ entre le premier signal de commande dudit au moins un premier interrupteur et un signal de commande dudit au moins un deuxième interrupteur,
dans lequel le circuit de contrôle (132) de l'étage secondaire est adapté à, lors de la phase de sélection de plage de fonctionnement :
a) déterminer un sens de transfert d'une puissance électrique entre l'étage primaire et l'étage secondaire ;
b) déterminer le signe d'un rapport ΔX/Δϕ entre une variation ΔX de la puissance électrique transférée entre l'étage primaire et l'étage secondaire ou d'un courant de sortie (Iₛ) de l'étage secondaire et une variation correspondante Δϕ de la phase du deuxième signal de commande dudit au moins un deuxième interrupteur ; et
c) modifier la phase du deuxième signal de commande dudit au moins un deuxième interrupteur en fonction du sens de transfert déterminé à l'étape a) et du signe du rapport ΔX/Δϕ déterminé à l'étape b), de façon à placer le déphasage ϕ dans la plage [-π/2 ; 0], ou [0 ; π/2].

2. Convertisseur selon la revendication 1, dans lequel le circuit de contrôle (132) de l'étage secondaire est configuré pour, à l'étape c) :
- si le sens de transfert déterminé à l'étape a) est positif et si le signe du rapport ΔX/Δϕ déterminé à l'étape b) est négatif, appliquer un déphasage de -π/2 au deuxième signal de commande dudit au moins un deuxième interrupteur ;
- si le sens de transfert déterminé à l'étape a) est positif et si le signe du rapport ΔX/Δϕ déterminé à l'étape b) est positif, n'appliquer aucun déphasage au deuxième signal de commande dudit au moins un deuxième interrupteur ;
- si le sens de transfert déterminé à l'étape a) est négatif et si le signe du rapport ΔX/Δϕ déterminé à l'étape b) est positif, appliquer un déphasage de π/2 au deuxième signal de commande dudit au moins un deuxième interrupteur ; et
- si le sens de transfert déterminé à l'étape a) est négatif et si le signe du rapport ΔX/Δϕ déterminé à l'étape b) est négatif, appliquer un déphasage de π au deuxième signal de commande dudit au moins un deuxième interrupteur.

3. Convertisseur selon la revendication 1 ou 2, dans lequel le circuit de contrôle (132) de l'étage secondaire est configuré pour réitérer la phase de sélection de plage de fonctionnement à chaque démarrage du convertisseur.

4. Convertisseur selon l'une quelconque des revendications 1 à 3, dans lequel le circuit de contrôle (132) de l'étage secondaire est en outre configuré pour, lors d'une phase de synchronisation d'une séquence de commande dudit au moins un deuxième interrupteur de découpage (S₂₁, S₂₂, S₂₃, S₂₄) par rapport à une séquence de commande dudit au moins un premier interrupteur de découpage (S₁₁, S₁₂, S₁₃, S₁₄), à partir d'une mesure d'un courant (I(W2)) ou d'une tension (U(W2)) dans l'étage secondaire, générer un troisième signal représentatif du premier signal de commande appliqué audit au moins un premier interrupteur (S₁₁, S₁₂, S₁₃, S₁₄) .

5. Convertisseur selon la revendication 4, dans lequel le circuit de contrôle (132) de l'étage secondaire est en outre configuré pour, lors de la phase de synchronisation, adapter le deuxième signal de commande dudit au moins un deuxième interrupteur (S₂₁, S₂₂, S₂₃, S₂₄) en fonction du troisième signal, de façon à synchroniser la commande dudit au moins un deuxième interrupteur (S₂₁, S₂₂, S₂₃, S₂₄) sur celle dudit au moins un premier interrupteur (S₁₁, S₁₂, S₁₃, S₁₄).

6. Convertisseur selon la revendication 5, dans lequel le circuit de contrôle (132) de l'étage secondaire (130) est configuré pour réitérer la phase de synchronisation de façon périodique.

7. Convertisseur selon l'une quelconque des revendications 1 à 6, dans lequel l'étage primaire (110) comprend quatre premiers interrupteurs (S₁₁, S₁₂, S₁₃, S₁₄) formant un premier pont en H (H1) commandé par le circuit de contrôle (112) de l'étage primaire, et l'étage secondaire comprend quatre deuxièmes interrupteurs (S₂₁, S₂₂, S₂₃, S₂₄) formant un deuxième pont en H (H2) commandé par le circuit de contrôle (132) de l'étage secondaire.

8. Convertisseur selon la revendication 7, dans lequel l'étage de transmission de puissance isolé (120) comprend un transformateur (T).

## Patentansprüche

1. Ein Leistungswandler, der Folgendes aufweist:
eine Primärstufe (110), die wenigstens einen ersten Abschaltschalter (S₁₁, S₁₂, S₁₃, S₁₄) aufweist,
eine Steuerschaltung (112), die geeignet ist, ein erstes Steuersignal an den wenigstens einen ersten Schalter anzulegen;
eine Sekundärstufe (130), die wenigstens einen zweiten Abschaltschalter (S₂₁, S₂₂, S₂₃, S₂₄) aufweist,
eine Steuerschaltung (132), die geeignet ist, ein zweites Steuersignal an den wenigstens einen zweiten Schalter anzulegen und einen Ausgangsstrom (I(W2)) der Sekundärstufe zu messen;
eine Leistungsübertragungsstufe, die die Primärstufe mit der Sekundärstufe koppelt,
wobei die Steuerschaltung (132) der Sekundärstufe von der Steuerschaltung (112) der Primärstufe elektrisch isoliert ist, und wobei die Steuerschaltung der Sekundärstufe konfiguriert ist, und zwar während einer Betriebsbereichsauswahlphase, wenn der Wandler gestartet wird, basierend auf einer Messung des Ausgangsstroms (I(W2)) der Sekundärstufe zu bestimmen, in welchem Betriebsbereich aus den Bereichen [-π ; -π/2], [-π/2 ; 0], [0; π/2], und [π/2 ; π] eine Phasenverschiebung ϕ zwischen dem ersten Signal zum Steuerndes wenigstens einen ersten Schalters und einem Signal zum Steuerndes wenigstens einen zweiten Schalters liegt,
wobei die Steuerschaltung (132) der Sekundärstufe während der Betriebsbereichsauswahlphase geeignet ist zum:
a) Bestimmen einer Richtung einer Übertragung einer elektrischen Leistung zwischen der Primärstufe und der Sekundärstufe,
b) Bestimmen des Vorzeichens eines Verhältnisses ΔX/Δϕ zwischen einer Änderung ΔX der zwischen der Primärstufe und der Sekundärstufe übertragenen elektrischen Leistung oder eines Ausgangsstroms (Is) der Sekundärstufe und einer entsprechenden Änderung Δϕ der Phase des zweiten Signals zum Steuerndes zweiten Schalters; und
c) Modifizieren der Phase des zweiten Signals zum Steuern des wenigstens einen zweiten Schalters gemäß der in Schritt a) bestimmten Übertragungsrichtung und dem Vorzeichen des in Schritt b) bestimmten Verhältnisses ΔX/Δϕ, um die Phasenverschiebung ϕ in den Bereich [-π/2; 0], oder [0; π/2] zu legen.

2. Der Wandler nach Anspruch 1, wobei die Steuerschaltung (132) der Sekundärstufe konfiguriert ist, in Schritt c):
- wenn die in Schritt a) ermittelte Übertragungsrichtung positiv ist und wenn das Vorzeichen des in Schritt b) ermittelten Verhältnisses ΔX/Δϕ negativ ist, eine Phasenverschiebung von -π/2 auf das zweite Signal zum Steuerndes wenigstens einen zweiten Schalters anzuwenden;
- wenn die in Schritt a) bestimmte Übertragungsrichtung positiv ist und wenn das Vorzeichen des in Schritt b) bestimmten Verhältnisses ΔX/Δϕ positiv ist, keine Phasenverschiebung auf das zweite Signal zum Steuerndes wenigstens einen zweiten Schalters anzuwenden;
- wenn die in Schritt a) bestimmte Übertragungsrichtung negativ ist und wenn das Vorzeichen des in Schritt b) bestimmten Verhältnisses ΔX/Δϕ positiv ist, eine Phasenverschiebung von π/2 auf das zweite Signal zum Steuerndes wenigstens einen zweiten Schalters anzuwenden; und
- wenn die in Schritt a) bestimmte Übertragungsrichtung negativ ist und wenn das Vorzeichen des in Schritt b) bestimmten Verhältnisses ΔX/Δϕ negativ ist, eine Phasenverschiebung von π auf das zweite Signal zum Steuerndes wenigstens einen zweiten Schalters anzuwenden.

3. Der Wandler nach Anspruch 1 oder 2, wobei die Steuerschaltung (132) der Sekundärstufe konfiguriert ist, die Betriebsbereichsauswahlphase bei jedem Start des Wandlers zu wiederholen.

4. Der Wandler nach einem der Ansprüche 1 bis 3, wobei die Steuerschaltung (132) der Sekundärstufe ferner konfiguriert ist, während einer Synchronisationsphase einer Steuersequenz des wenigstens einen zweiten Abschaltschalters (S₂₁, S₂₂, S₂₃, S₂₄) in Bezug auf eine Steuersequenz des wenigstens einen ersten Abschaltschalters (S₁₁, S₁₂, S₁₃, S₁₄), basierend auf einer Messung eines Stroms (I(W2)) oder einer Spannung (U(W2)) in der Sekundärstufe, ein drittes Signal zu erzeugen, das für das erste Steuersignal repräsentativ ist, das an den wenigstens einen ersten Schalter (S₁₁, S₁₂, S₁₃, S₁₄) angelegt wird.

5. Der Wandler nach Anspruch 4, wobei die Steuerschaltung (132) der Sekundärstufe ferner konfiguriert ist, während der Synchronisationsphase das zweite Steuersignal des wenigstens einen zweiten Schalters (S₂₁, S₂₂, S₂₃, S₂₄) entsprechend dem dritten Signal anzupassen, um die Steuerung des wenigstens einen zweiten Schalters (S₂₁, S₂₂, S₂₃, S₂₄) mit der des wenigstens einen ersten Schalters (S₁₁, S₁₂, S₁₃, S₁₄) zu synchronisieren.

6. Der Wandler nach Anspruch 5, wobei die Steuerschaltung (132) der Sekundärstufe (130) konfiguriert ist, die Synchronisierungsphase periodisch zu wiederholen.

7. Der Wandler nach einem der Ansprüche 1 bis 6, wobei die Primärstufe (110) vier erste Schalter (S₁₁, S₁₂, S₁₃, S₁₄) aufweist, die eine erste H-Brücke (H1) bilden, die von der Steuerschaltung (112) der Primärstufe gesteuert wird, und die Sekundärstufe vier zweite Schalter (S₂₁, S₂₂, S₂₃, S₂₄) aufweist, die eine zweite H-Brücke (H2) bilden, die von der Steuerschaltung (132) der Sekundärstufe gesteuert wird.

8. Der Wandler nach Anspruch 7, wobei die isolierte Leistungsübertragungsstufe (120) einen Transformator (T) aufweist.

## Claims

1. A power converter comprising:
a primary stage (110) comprising at least one first cut-off switch (S₁₁, S₁₂, S₁₃, S₁₄) ;
a control circuit (112) capable of applying a first control signal to said at least one first switch;
a secondary stage (130) comprising at least one second cut-off switch (S₂₁, S₂₂, S₂₃, S₂₄) ;
a control circuit (132) capable of applying a second control signal to said at least one second switch and of measuring an output current (I(W2)) of the secondary stage;
a power transmission stage coupling the primary stage to the secondary stage,
wherein the control circuit (132) of the secondary stage is electrically isolated from the control circuit (112) of the primary stage, and wherein the control circuit of the secondary stage is configured to, during an operating range selection phase when the converter is started, determine, based on a measurement of the output current (I(W2)) of the secondary stage, in which operating range among ranges [-π ; -π/2], [-π/2 ; 0], [0 ; π/2], and [π/2 ; π] a phase shift ϕ between the first signal for controlling said at least one first switch and a signal for controlling said at least one second switch is located,
wherein the control circuit (132) of the secondary stage is capable, during the operating range selection phase, of:
a) determining a direction of transfer of an electric power between the primary stage and the secondary stage;
b) determining the sign of a ratio ΔX/Δϕ between a variation ΔX of the electric power transferred between the primary stage and the secondary stage or of an output current (Iₛ) of the secondary stage and a corresponding variation Δϕ of the phase of the second signal for controlling the second switch; and
c) modifying the phase of the second signal for controlling said at least one second switch according to the transfer direction determined at step a) and to the sign of the ratio ΔX/Δϕ determined at step b), to place phase shift ϕ within range [-π/2; 0], or [0; π/2].

2. The converter according to claim 1, wherein the control circuit (132) of the secondary stage is configured to, at step c):
- if the transfer direction determined at step a) is positive and if the sign of the ratio ΔX/Δϕ determined at step b) is negative, apply a -π/2 phase shift to the second signal for controlling said at least one second switch;
- if the transfer direction determined at step a) is positive and if the sign of the ratio ΔX/Δϕ determined at step b) is positive, apply no phase shift to the second signal for controlling said at least one second switch;
- if the transfer direction determined at step a) is negative and if the sign of the ratio ΔX/Δϕ determined at step b) is positive, apply a π/2 phase shift to the second signal for controlling said at least one second switch; and
- if the transfer direction determined at step a) is negative and if the sign of the ratio ΔX/Δϕ determined at step b) is negative, apply a π phase shift to the second signal for controlling said at least one second switch.

3. The converter according to claim 1 or 2, wherein the control circuit (132) of the secondary stage is configured to repeat the operating range selection phase each time the converter is started.

4. The converter according to any of claims 1 to 3, wherein the control circuit (132) of the secondary stage is further configured to, during a synchronization phase of a sequence of control of said at least one second cut-off switch (S₂₁, S₂₂, S₂₃, S₂₄) with respect to a sequence of control of said at least one first cut-off switch (S₁₁, S₁₂, S₁₃, S₁₄), based on a measurement of a current (I(W2)) or of a voltage (U(W2)) in the secondary stage, generate a third signal representative of the first control signal applied to said at least one first switch (S₁₁, S₁₂, S₁₃, S₁₄).

5. The converter according to claim 4, wherein the control circuit (132) of the secondary stage is further configured to, during the synchronization phase, adapt the second signal for controlling said at least one second switch (S₂₁, S₂₂, S₂₃, S₂₄) according to the third signal, to synchronize the control of said at least one second switch (S₂₁, S₂₂, S₂₃, S₂₄) on that of said at least one first switch (S₁₁, S₁₂, S₁₃, S₁₄) .

6. The converter according to claim 5, wherein the control circuit (132) of the secondary stage (130) is configured to periodically repeat the synchronization phase.

7. The converter according to any of claims 1 to 6, wherein the primary stage (110) comprises four first switches (S₁₁, S₁₂, S₁₃, S₁₄) forming a first H bridge (H1) controlled by the control circuit (112) of the primary stage, and the secondary stage comprises four second switches (S₂₁, S₂₂, S₂₃, S₂₄) forming a second H bridge (H2) controlled by the control circuit (132) of the secondary stage.

8. The converter according to claim 7, wherein the isolated power transmission stage (120) comprises a transformer (T).
